# EUROPÄISCHE PATENTSCHRIFT

(11) **EP 2 738 070 B1**
(45) Veröffentlichungstag und Bekanntmachung des Hinweises auf die Patenterteilung: **22.04.2020**
(21) Anmeldenummer: 13004149.4
(22) Anmeldetag: 22.08.2013
(51) Int. Cl.: B62D 33/06

(54) **Nutzfahrzeug mit Fahrerhaus**
Commercial vehicle with driver's cab
Véhicule utilitaire avec cabine

(30) Priorität: 01.12.2012 DE 102012023545
(43) Veröffentlichungstag der Anmeldung: 04.06.2014
(73) Patentinhaber: MAN Truck & Bus SE, 80995 München (DE)
(72) Erfinder: Beck, Klaus, 82278 Althegnenberg (DE); Rausch, Ludwig, 80798 München (DE)
(74) Vertreter: v. Bezold & Partner Patentanwälte - PartG mbB

(56) Entgegenhaltungen:
- EP-A2- 2 657 111
- WO-A1-2006/081937
- DE-A1- 1 430 735
- DE-A1- 10 133 969

## Beschreibung

Die Erfindung betrifft ein Nutzfahrzeug, vorzugsweise eine Sattelzugmaschine, zum Ankuppeln eines Anhängers, mit einem eine tragende Struktur umfassenden Fahrerhaus.

Zum Stand der Technik kann zunächst auf die DE 14 30 735 A1 verwiesen werden, die lehrt, das Fahrerhaus bei einer Sattelzugmaschine derart am Fahrgestellrahmen anzulenken, dass das Fahrerhaus keine Schwingungen mehr ausführt, die als unangenehm empfunden werden, wobei das Fahrerhaus um eine Fahrzeugquerachse schwenkbar am Fahrgestellrahmen angeordnet ist, die innerhalb Dreivierteln des Abstandes von der Drehachse Sattelkupplung zur Fahrerhausrückwand, vorzugsweise in der Vertikalebene durch die Sattelkupplungsdrehachse liegt. Zum Stand der Technik kann ferner auf die DE 101 33 969 A1 verwiesen werden.

Fahrerhauslagerungen für Fahrerhäuser von Sattelzugmaschinen sind in den verschiedensten Ausführungsformen bekannt. Die Fahrerhauslagerungen umfassen üblicherweise vordere Lagereinrichtungen, die meist am vorderen Ende der Fahrerhäuser, benachbart zu Vorderachsen der Sattelzugmaschinen angeordnet sind, und hintere Lagereinrichtungen, die meist unmittelbar vor den Hinterseiten der Fahrerhäuser angeordnet sind. Die hinteren Lagereinrichtungen für die Fahrerhäuser und die Sattelplatten der Sattelzugmaschinen sind in Längsrichtung der Sattelzugmaschinen weit voneinander entfernt. Nachteilhaft an den üblichen Fahrerhauslagerungen ist z.B., dass die große Masse der Sattelanhänger in Längsrichtung der Sattelzugmaschinen mit einer anderen Frequenz schwingt als die der leichteren Sattelzugmaschinen. Dadurch werden die Sattelzugmaschinen von den Sattelanhängern z.B. während der Fahrt über unebenes Terrain quasi ständig beschleunigt, was zu Längsstößen oder Längsschwingungen auf die Fahrerhäuser führt. Die Längsstöße oder Längsschwingungen können zudem überlagert werden von vertikalen Beschleunigungsreaktionen der Fahrerhäuser, die z.B. aus Chassis-/Fahrgestellrahmendurchbiegungen in Folge von Vertikalkräften auf die Sattelplatten resultieren.

Eine Aufgabe der Erfindung ist es, eine alternative und/oder verbesserte Fahrerhauslagerung für ein Nutzfahrzeug, vorzugsweise eine Sattelzugmaschine, zu schaffen.

Diese Aufgabe kann mit den Merkmalen des Hauptanspruchs gelöst werden. Vorteilhafte Weiterbildungen sind den Unteransprüchen zu entnehmen.

Erfindungsgemäß wird ein Nutzfahrzeug zum Ankuppeln eines Anhängers geschaffen. Das Nutzfahrzeug ist vorzugsweise eine Sattelzugmaschine zum Aufsatteln eines Sattelaufliegers. Das Nutzfahrzeug umfasst ein Fahrerhaus, das mit einer tragenden Struktur versehen ist und vorzugsweise kippbar ausgeführt ist, eine vordere Lagereinrichtung und eine hintere Lagereinrichtung, die zum Lagern der tragenden Struktur dienen, und eine Kupplungseinrichtung, die ein vorderes Ende und ein hinteres Ende aufweist. Die Kupplungseinrichtung ist vorzugsweise eine Sattelkupplungseinrichtung, die z.B. eine Sattelplatte zum Ankuppeln eines Sattelanhängers aufweist.

Das Nutzfahrzeug zeichnet sich insbesondere dadurch aus, dass die tragende Struktur sich vom Fahrerhaus über dessen Hinterseite hinaus zweckmäßig ausleger- oder längsträgerförmig nach hinten erstreckt, vorzugsweise sich vom Fahrerhaus bis hinter das vordere Ende der Kupplungseinrichtung erstreckt. Das Nutzfahrzeug zeichnet sich ferner insbesondere dadurch aus, dass die hintere Lagereinrichtung hinter dem Fahrerhaus und/oder zumindest abschnittsweise hinter dem vorderen Ende der Kupplungseinrichtung und vorzugsweise vor dem hinteren Ende der Kupplungseinrichtung angeordnet ist.

Dadurch, dass sich die tragende Struktur vom Fahrerhaus nach hinten erstreckt bzw. die hintere Lagereinrichtung wie zuvor beschrieben angeordnet ist, ist eine Lagerdistanzierung (Lagerabstandsvergrößerung) in Längsrichtung des Nutzfahrzeugs erzeugbar. Die Lagerdistanzierung führt dazu, dass Reaktionskräfte in der vorderen Lagereinrichtung und der hinteren Lagereinrichtung klein gehalten werden können. Ein Moment, das beim Bremsen des Nutzfahrzeugs zu einer Nickbewegung des Fahrerhauses führen würde, kann quasi optimal abgestützt werden und führt zu nur geringen Lagekräften. Dadurch kann zumindest die hintere Lagereinrichtung z.B. aus sehr weichen Molekularlagern ausgeführt werden. Die hintere Lagereinrichtung hat zudem nur relativ kleine Winkelauslenkungen zu ermöglichen und kann daher weitgehend frei gestaltet werden. Die Lagerdistanzierung führt außerdem zu einer Minimierung der Winkelauslenkung des Fahrerhauses bei gegenüber herkömmlichen Fahrerhauslagerungen gleichem oder zumindest vergleichbarem Federweg.

Die hintere Lagereinrichtung kann zweckmäßig bedingt durch ihre Weichheit und die Freiheit ihrer Gestalt in hohem Maße dämpfend ausgelegt sein, z.B. für den akustischen und/oder für den haptisch wahrnehmbaren Frequenzbereich. Die vordere Lagereinrichtung ermöglicht dem Fahrerhaus zweckmäßig einen ausreichenden im Wesentlichen vertikalen Weg, um Vertikalstöße oder Vertikalschwingungen z.B. aus dem Fahrgestell (Chassis) und/oder einer Vorderachse des Nutzfahrzeugs aufzunehmen und vom Fahrerhaus abzuhalten. Durch die Kombination aus einer relativ weichen hinteren Lagereinrichtung und der Lagerdistanzierung der vorderen Lagereinrichtung und der hinteren Lagereinrichtung kann eine nahezu vollständige Entkopplung des Fahrerhauses vom Fahrgestell, insbesondere dessen Winkelauslenkung, erzielt werden. Zudem kann wegen der verbesserten Entkopplung eine größere Durchbiegung des Fahrgestells zugelassen werden, was wiederum mit möglichen Gewichtseinsparungen in Bezug auf das Fahrgestell einhergeht.

Dadurch, dass sich die tragende Struktur vom Fahrerhaus nach hinten erstreckt bzw. die hintere Lagereinrichtung wie zuvor beschrieben angeordnet ist, kann zudem ermöglicht werden, dass während der Fahrt des Nutzfahrzeugs das Fahrerhaus in Längsrichtung des Nutzfahrzeugs mit der zumindest nahezu gleichen Frequenz schwingen kann wie der Anhänger. Von der Differenz zwischen der Anhänger- und der Fahrgestellbewegung ist im Fahrerhaus zumindest großteils nichts mehr zur spüren.

Die Erfindung führt insbesondere zu einem vibrationsarmen und leisen Fahrerhaus, wodurch z.B. die (Dauer-) Leistungsfähigkeit eines Fahrers erheblich gesteigert werden kann.

Es ist möglich, dass die Kupplungseinrichtung eine übliche, aus dem Stand der Technik bekannte Kupplungseinrichtung ist, z.B. eine Sattelkupplungseinrichtung mit einer Sattelplatte, die mit einer Drehgelenkeinrichtung versehen ist, um die die Sattelplatte zweckmäßig schwenken kann. Vorzugsweise definiert die Sattelplatte das vordere Ende und/oder das hintere Ende der Kupplungseinrichtung.

Bei einer besonders bevorzugten Ausführungsform der Erfindung überlappt die hintere Lagereinrichtung seitlich die Drehgelenkeinrichtung der Sattelplatte oder ist seitlich betrachtet zumindest benachbart zu der Drehgelenkeinrichtung der Sattelplatte angeordnet, vorzugsweise in unmittelbarer Nähe dazu. Letztgenannte Merkmale sind so zu verstehen, dass sie die Positionierung in Längs- und Höhenrichtung des Nutzfahrzeugs definieren, während die Positionierung in Querrichtung des Nutzfahrzeugs nicht eingeschränkt wird.

Die hintere Lagereinrichtung kann dazu dienen, die Führung/Lagerung der tragenden Struktur in Längs- und/oder Querrichtung des Nutzfahrzeugs zumindest teilweise zu übernehmen.

Die tragende Struktur kann in Bezug auf die zweckmäßig einen vertikalen Bewegungsspielraum zur Verfügung stellende vordere Lagereinrichtung und die zweckmäßig eine Schwenk- und/oder Schwingachse definierende hintere Lagereinrichtung als Schwinge wirken. Dadurch können z.B. vor allem im Wesentlichen vertikale Stöße oder Schwingungen auf das Fahrerhaus reduziert werden.

Die tragende Struktur ist zweckmäßig an der vorderen Lagereinrichtung auf- und abbewegbar gelagert, z.B. über Feder- und/oder Dämpferelemente.

Die hintere Lagereinrichtung kann eine Schwenk- und/oder Schwingachse für die tragende Struktur bilden, um die die tragende Struktur zweckmäßig zumindest geringfügig schwenken bzw. schwingen kann.

Es ist möglich, dass die Lagerachse der hinteren Lagereinrichtung im Wesentlichen parallel zur Querrichtung des Nutzfahrzeugs verläuft und/oder zumindest benachbart zu der Drehgelenkeinrichtung der Sattelplatte. Es ist sogar möglich, dass die Lagerachse der hinteren Lagereinrichtung im Wesentlichen koaxial zu der Drehgelenkeinrichtung der Sattelplatte verläuft.

Die hintere Lagereinrichtung kann zudem zweckmäßig in Höhenrichtung wirksame Dämpfungselemente umfassen.

Es ist möglich, dass die hintere Lagereinrichtung ein zumindest geringfügiges Schwenken/Schwingen der tragenden Struktur zulässt und z.B. Drehlager, zweckmäßig in Längsrichtung des Nutzfahrzeugs angeordnete Blattfedern oder Molekularlager umfasst. Unter einem Molekularlager im Sinne der Erfindung ist insbesondere eine Lagereinrichtung zu verstehen, die die tragende Struktur dämpfend lagert, zudem aber eine Relativbewegung (z.B. eine Schwenk-/Schwingbewegung) der tragenden Struktur zulässt.

Erfindungsgemäss, ist die tragende Struktur zumindest abschnittsweise elastisch verformbar, um in Bezug auf die hintere Lagereinrichtung zumindest geringfügig schwenken/schwingen zu können. Dabei muss die hintere Lagereinrichtung nicht zwangsläufig eine Schwenk-/Schwingbewegung der tragenden Struktur zulassen. Vielmehr kann die tragende Struktur an der hinteren Lagereinrichtung im Wesentlichen fest eingespannt sein. Es ist somit möglich, dass die hintere Lagereinrichtung selbst keine oder nur sehr kleine Schwenk-/Schwingbewegungen der tragenden Struktur zulässt und die eigentliche Schwenk-/Schwingbarkeit dadurch ermöglicht wird, dass die tragende Struktur zumindest abschnittsweise elastisch verformbar ausgeführt ist.

Die tragende Struktur kann ferner zumindest abschnittsweise elastisch verformbar sein, um ihre Wankabstützung zumindest teilweise selbst zu übernehmen.

Es ist möglich, dass die tragende Struktur eine Trägerkonstruktion (z.B. aus U-, L-, I- oder Hohlprofilträgern) oder eine Gitterrahmenkonstruktion umfasst.

Es ist ebenso möglich, dass die tragende Struktur eine selbsttragende Karosserie umfasst. Die tragende Struktur kann z.B. eine Seitenverkleidung für das Nutzfahrzeug umfassen, die als mittragender Teil der tragenden Struktur wirkt. Die selbsttragende Karosserie und/oder die Seitenverkleidung kann z.B. zwischen einer Vorderachse und einer Hinterachse des Nutzfahrzeugs angeordnet sein und zweckmäßig Styling- und/oder Aerodynamikfunktionen übernehmen. Um der tragenden Funktion gerecht zu werden, ist ihre Festigkeit und Steifigkeit gegenüber herkömmlichen Seitenverkleidungen zu erhöhen.

In die tragende Struktur können zumindest Teile der Kotflügel für die Vorderräder des Nutzfahrzeugs und/oder zumindest Teile der Kotflügel für die Hinterräder des Nutzfahrzeugs integriert sein.

Es ist möglich, dass die vordere Lagereinrichtung die tragende Struktur auf fahrgestellfesten Teilen, auf Rad-führenden Teilen (z.B. Einzelradaufhängungen) oder auf einem Vorderachskörper (z.B. einem Starrachskörper) des Nutzfahrzeugs abstützt. Vor allem bei den beiden letztgenannten Ausführungsformen kann der Körperschall auf das Fahrerhaus besonders stark reduziert werden. So müssen insbesondere die Triebstrangschwingungen hinten den Umweg über eine lange Fahrgestellstrecke zu der Kupplungseinrichtung, der hinteren Lagereinrichtung und quasi zurück über die tragende Struktur zurücklegen, um zum Fahrerhaus zu gelangen. Vorne geht der Weg über das Fahrgestell, die Vorderachsführung und die vordere Lagereinrichtung oder zusätzliche Feder- und/oder Dämpfungselemente. Eine Nickbewegung des Fahrgestells, die z.B. aus einem Bremsmoment resultiert, wirkt sich quasi nur über die im Wesentlichen vertikale Bewegung der Kupplungseinrichtung auf das Fahrerhaus aus. Das Fahrerhaus hat damit ein vom Nutzfahrzeug-Fahrgestell zumindest nahezu unabhängiges Nickverhalten mit vorzugsweise zudem relativ geringen Nickwinkeln. Die Entkopplung des Fahrerhauses von der dynamischen Durchbiegung des Fahrgestells kann weiter verbessert werden: Während Feder- und/oder Dämpfungselemente zwischen dem Fahrgestell und dem Fahrerhaus eine Vertikalbewegung aufgrund einer Fahrgestellbiegung auf das Fahrerhaus vorne übertragen, bleibt das Fahrerhaus selbst davon im Wesentlichen unbehelligt, wenn die Feder- und/oder Dämpfungselemente zwischen dem Fahrerhaus und Rad-führenden Teilen angeordnet werden.

Es ist möglich, dass die Führung/Lagerung der tragenden Struktur in Längs- und/oder Querrichtung des Nutzfahrzeugs zumindest teilweise durch die vordere Lagereinrichtung oder eine zusätzliche, zweckmäßig vordere Lagereinrichtung realisiert wird, z.B. mittels eines Wattgestänges, einer Schwingeneinrichtung, etc..

Zudem kann das Fahrerhaus, insbesondere dessen tragende Struktur, vorne über eine Schwingen- oder Stabilisatoreinrichtung gegen Wanken abgestützt sein.

Die vordere Lagereinrichtung kann zwei zur Fahrzeugmitte hin schräg angestellte Lagermittel umfassen, um zusätzlich zu ihrer Höhenführung eine Querführung zu übernehmen.

Es ist möglich, dass die tragende Struktur zusammen mit dem Fahrerhaus kippbar ist. Z.B. kann die tragende Struktur zusammen mit dem Fahrerhaus um die hintere Lagereinrichtung vorzugsweise nach hinten kippbar sein. Alternativ kann die tragende Struktur zusammen mit dem Fahrerhaus um die vordere Lagereinrichtung oder um eine zusätzliche vordere Kipplagereinrichtung vorzugsweise nach vorne kippbar sein. Bei den zuvor beschriebenen Ausführungsformen ist das Fahrerhaus zweckmäßig als Ganzes kippbar.

Es ist möglich, dass das Fahrerhaus oder zumindest ein oberer Teil davon mittels einer Kipplagereinrichtung relativ zu der tragenden Struktur kippbar ist. Das Fahrerhaus kann somit im Wesentlichen horizontal zweiteilbar ausgeführt sein. Ein oberer Teil des Fahrerhauses kann z.B. über ein zusätzliches Scharnier nach vorne gekippt werden, während ein unterer Teil des Fahrerhauses, der z.B. Teile der tragenden Struktur umfasst, in seiner Normallage verbleiben kann. Ein oder mehrere Fixierungsmittel (z.B. Schlösser) können vorgesehen werden, um den oberen Teil des Fahrerhauses auf dem unteren Teil des Fahrerhauses zu fixieren. Das Kippen des Fahrerhauses kann z.B. mit angekuppeltem Anhänger durchgeführt werden.

Zu erwähnen ist, dass die vordere Lagereinrichtung zweckmäßig zwei Lagerabschnitte für die zwei Nutzfahrzeugseiten umfasst. Ebenso umfasst die hintere Lagereinrichtung zweckmäßig zwei Lagerabschnitte für die zwei Nutzfahrzeugseiten.

Zu erwähnen ist außerdem, dass die vordere Lagereinrichtung z.B. Molekularlager, Blattfedern (z.B. quer- oder längs zum Nutzfahrzeug ausgerichtet), Luftfedern, Spiralfedern, Luftfederbeine, Spiralfederbeine, etc. umfassen kann.

Ferner ist noch zu erwähnen, dass die Merkmale "vorne/vordere" und "hinten/hintere" vorzugsweise so zu verstehen sind, dass sie die Positionierung in Längsrichtung des Nutzfahrzeugs definieren, während die Positionierung in Höhen- und/oder Querrichtung des Nutzfahrzeugs nicht eingeschränkt wird, es sei denn, die Positionierung in Höhen- und/oder Querrichtung wird ausdrücklich spezifiziert.

Die oben beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines Nutzfahrzeugs gemäß einer Ausführungsform der Erfindung,
- Figur 2: zeigt eine perspektivische Ansicht des Nutzfahrzeugs der Figur 1 mit gekipptem Fahrerhaus,
- Figur 3: zeigt eine perspektivische Ansicht des Fahrerhauses und seiner tragenden Struktur der Figuren 1 und 2,
- Figur 4: zeigt eine perspektivische Ansicht des Fahrerhauses und seiner tragenden Struktur der Figur 3, allerdings mit gekipptem Fahrerhaus,
- Figur 5a: zeigt eine Seitenansicht des Nutzfahrzeugs der Figuren 1 bis 4,
- Figur 5b: zeigt eine schematische, vergrößerte Seitenansicht des in Figur 5a gekennzeichneten Bereichs um eine hintere Lagereinrichtung,
- Figur 6: zeigt eine schematische Draufsicht auf die hintere Lagereinrichtung, die tragende Struktur und die Kupplungseinrichtung der Figuren 5a und 5b,
- Figur 7: zeigt eine perspektivische Ansicht eines Nutzfahrzeugs gemäß einer anderen Ausführungsform der Erfindung,
- Figur 8: zeigt eine perspektivische Ansicht des Fahrerhauses und seiner tragenden Struktur der Figur 7,
- Figur 9: zeigt eine Seitenansicht des Nutzfahrzeugs der Figuren 7 und 8,
- Figur 10: zeigt eine explosionsartige Seitenansicht eines Nutzfahrzeugs gemäß einer Ausführungsform der Erfindung,
- Figur 11: zeigt eine explosionsartige Seitenansicht eines Nutzfahrzeugs gemäß einer anderen Ausführungsform der Erfindung,
- Figur 12: zeigt eine Seitenansicht eines Nutzfahrzeugs gemäß einer Ausführungsform der Erfindung,
- Figur 13: zeigt eine Seitenansicht eines Nutzfahrzeugs gemäß einer anderen Ausführungsform der Erfindung,
- Figur 14: zeigt eine Seitenansicht eines Nutzfahrzeugs gemäß einer noch anderen Ausführungsform der Erfindung,
- Figur 15: zeigt eine Seitenansicht eines Nutzfahrzeugs gemäß der Erfindung,
- Figur 16: zeigt ein Lagerungskonzept gemäß einer Ausführungsform der Erfindung und
- Figur 17: zeigt ein Lagerungskonzept gemäß einer anderen Ausführungsform der Erfindung.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen wird, um Wiederholungen zu vermeiden.

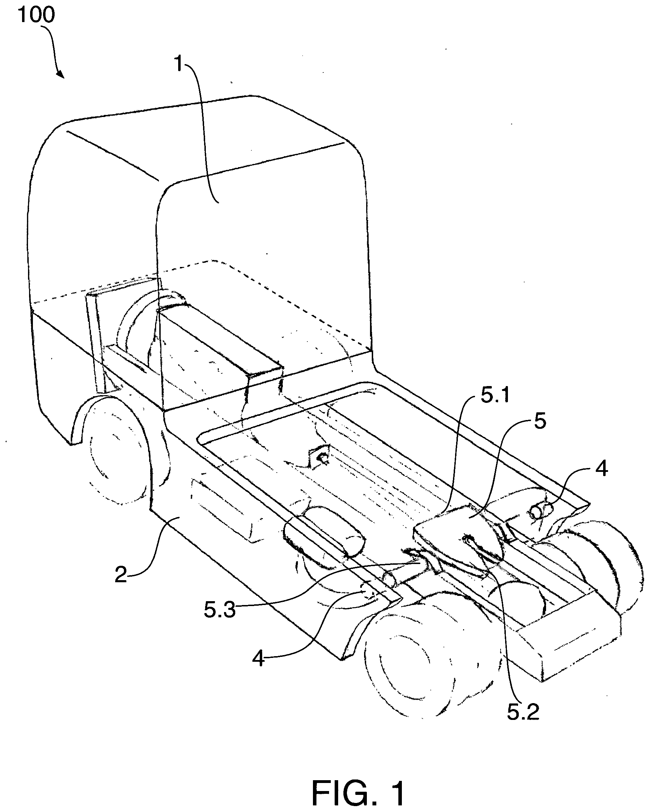

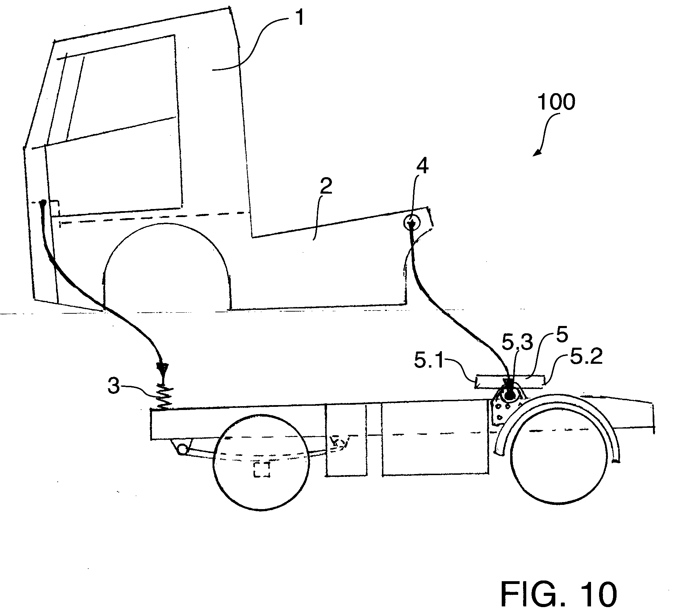

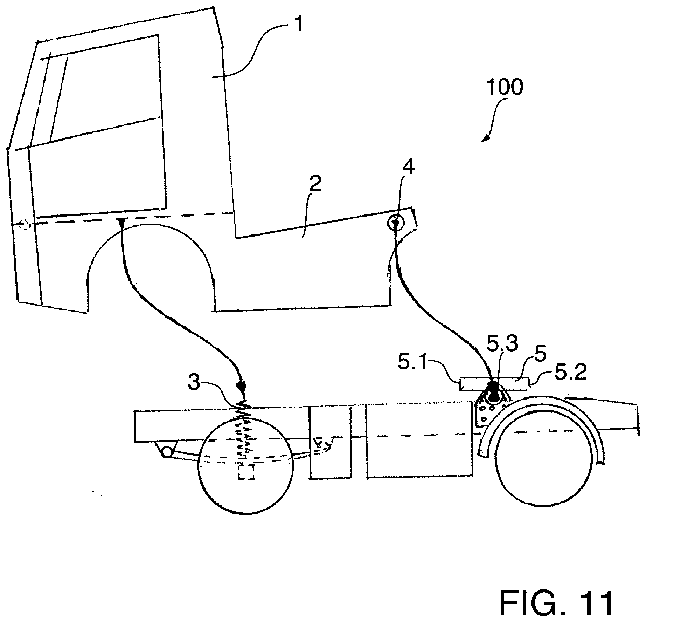

Figur 1 zeigt eine perspektivische Ansicht eines Nutzfahrzeugs 100 in Form einer Sattelzugmaschine zum Aufsatteln eines Sattelanhängers. Das Nutzfahrzeug 100 umfasst ein kippbares Fahrerhaus 1 mit einer tragenden Struktur 2, eine in Figur 1 nicht zu sehende vordere Lagereinrichtung 3 (vergleiche z.B. Figuren 10 und 11), eine hintere Lagereinrichtung 4 und eine Kupplungseinrichtung 5 zum Ankuppeln des Sattelanhängers. Die vordere Lagereinrichtung 3 und die hintere Lagereinrichtung 4 dienen zum Lagern der tragenden Struktur 2. Die Kupplungseinrichtung 5 ist als herkömmliche Sattelkupplungseinrichtung ausgeführt. Sie umfasst eine Sattelplatte, die ein vorderes Ende 5.1 und ein hinteres Ende 5.2 der Kupplungseinrichtung 5 definiert, und ist mit einer Drehgelenkeinrichtung 5.3 ausgestattet, um die die Sattelplatte schwenken kann.

Die hintere Lagereinrichtung 4 ist hinter dem vorderen Ende 5.1 der Kupplungseinrichtung 5 und vor dem hinteren Ende 5.2 der Kupplungseinrichtung 5 angeordnet. Die tragende Struktur 2 erstreckt sich vom Fahrerhaus 1 ausleger- oder längsträgerförmig bis hinter das vordere Ende 5.1 der Kupplungseinrichtung 5, um an der hinteren Lagereinrichtung 4 gelagert zu werden.

Die tragende Struktur 2 ist an der vorderen Lagereinrichtung 3 auf- und abbewegbar gelagert, während die hintere, benachbart zu der Kupplungseinrichtung 5 angeordnete Lagereinrichtung 4 eine Schwenk-/Schwingachse für die tragende Struktur 2 bildet, um die die tragende Struktur 2 zumindest geringfügig schwenken/schwingen kann. Dadurch kann die tragende Struktur 2 als Schwinge wirken und das Fahrerhaus 1 während der Fahrt im Wesentlichen mit der gleichen Frequenz schwingen wie der Sattelanhänger, was dazu führt, dass vom Sattelanhänger erzeugte Längsstöße auf das Fahrerhaus 1 zumindest reduziert werden.

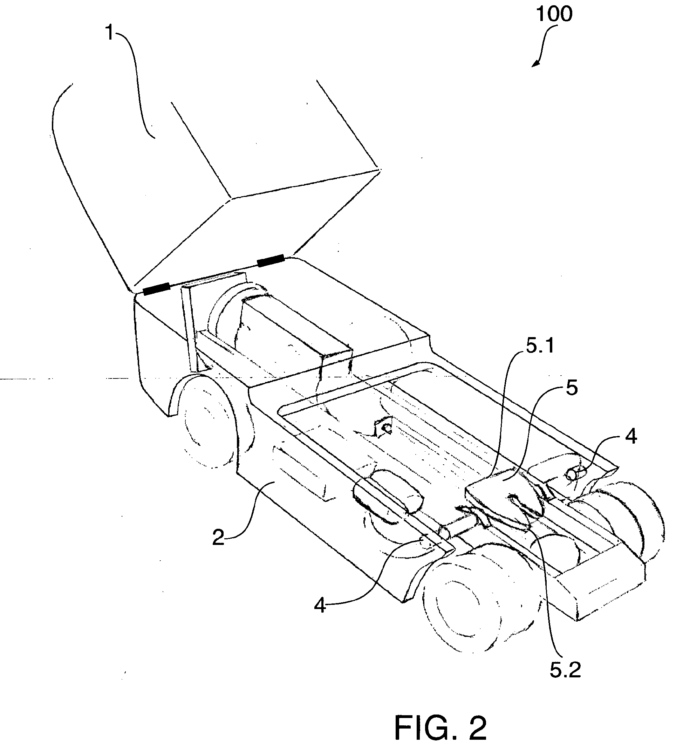

Figur 2 zeigt eine perspektivische Ansicht des Nutzfahrzeugs 100 mit über eine vordere Kipplagereinrichtung nach vorne gekipptem Fahrerhaus 1. Das Fahrerhaus 1 ist um die Kipplagereinrichtung im Wesentlichen horizontal teilbar und nach vorne kippbar, während die tragende Struktur 2 an der vorderen Lagereinrichtung 3 und der hinteren Lagereinrichtung 4 gelagert bleibt.

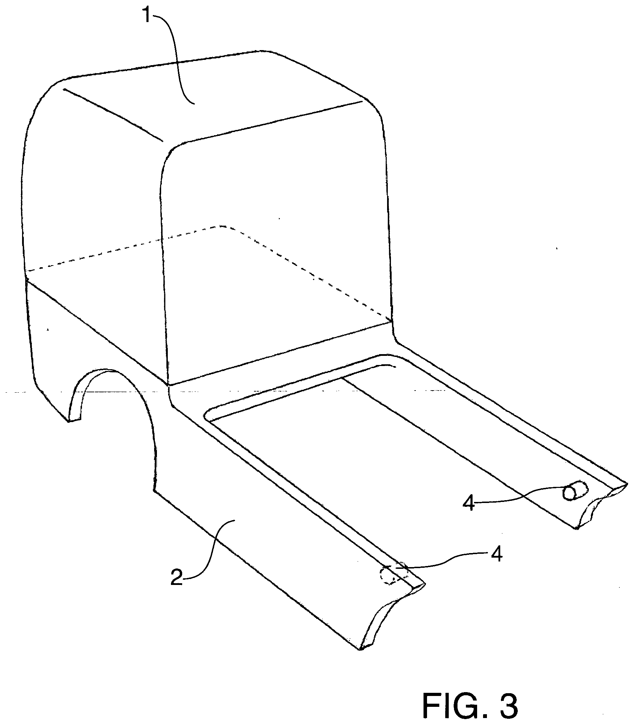

Figur 3 zeigt das in seiner Normallage befindliche Fahrerhaus 1, seine tragende Struktur 2 und die hintere Lagereinrichtung 4 isoliert von anderen Nutzfahrzeugteilen. Die tragende Struktur 2 ist als selbsttragende Karrosiere ausgeführt und umfasst eine Seitenverkleidung für das Nutzfahrzeug 100, die als mittragender Teil der tragenden Struktur 2 wirkt.

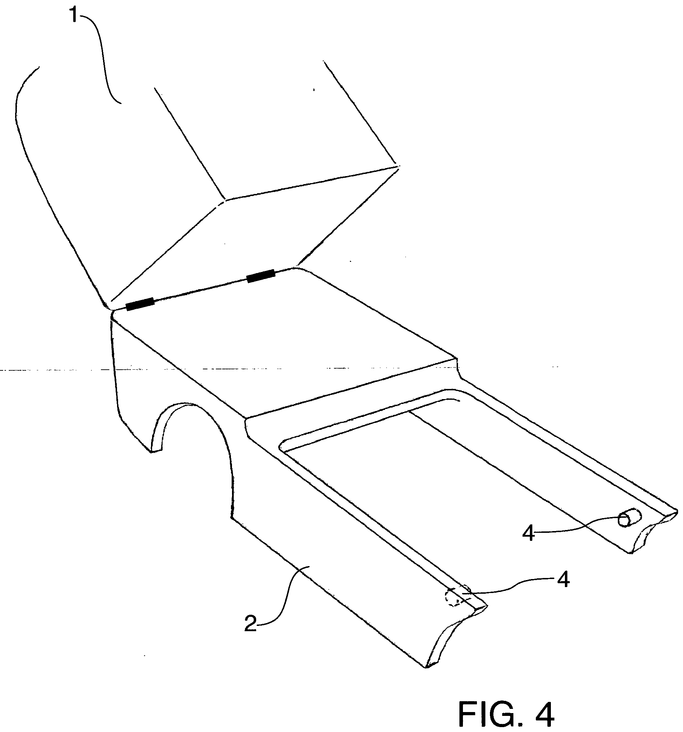

Figur 4 zeigt das in seiner Kipplage befindliche Fahrerhaus 1, seine tragende Struktur 2 und die hintere Lagereinrichtung 4 isoliert von anderen Nutzfahrzeugteilen.

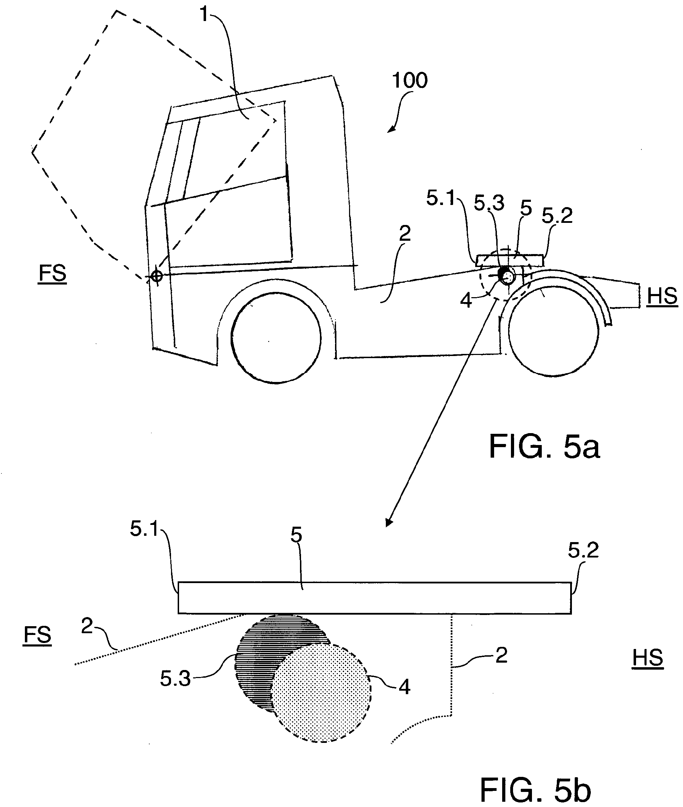

Figur 5a zeigt eine Seitenansicht des Nutzfahrzeugs 100 der Figuren 1 bis 4 mit dem Fahrerhaus 1 im Normalzustand (durchgezogene Linie) und dem Fahrerhaus 1 im Kippzustand (gestrichelte Linie). Das Bezugszeichen FS kennzeichnet die Vorderseite des Nutzfahrzeugs 100, der die vordere Lagereinrichtung 3 und das vordere Ende 5.1 der Kupplungseinrichtung 5 zugewandt sind, während das Bezugzeichen HS die Heckseite des Nutzfahrzeugs 100 kennzeichnet, der die hintere Lagereinrichtung 4 und das hintere Ende 5.2 der Kupplungseinrichtung 5 zugewandt sind.

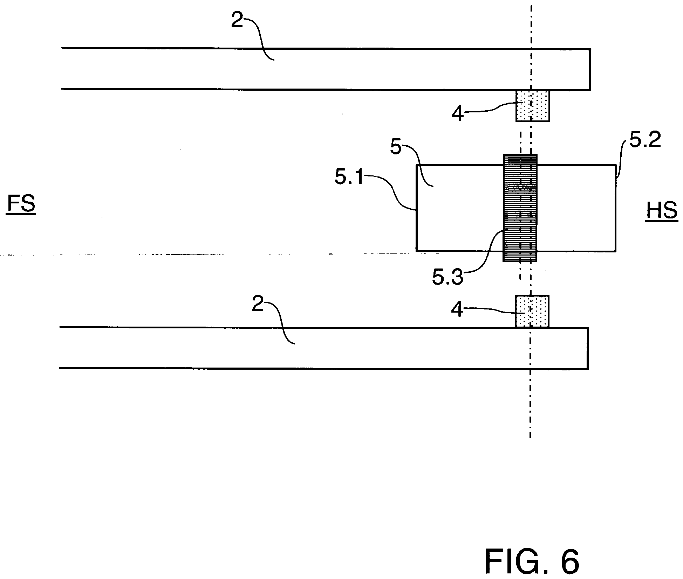

Figur 5b zeigt eine schematische, vergrößerte Seitensicht des in Figur 5a gekennzeichneten Bereichs, während Figur 6 eine entsprechende schematische Draufsicht zeigt. Den Figuren 5b und 6 kann entnommen werden, dass die hintere Lagereinrichtung 4 in Längsrichtung des Nutzfahrzeugs 100 abschnittsweise auf der gleichen Längsposition angeordnet ist wie die Kupplungseinrichtung 5, nämlich hinter dem vorderen Ende 5.1 der Kupplungseinrichtung 5 und vor dem hinteren Ende 5.2 der Kupplungseinrichtung 5.

Die Figuren 5b und 6 zeigen ferner, dass die hintere Lagereinrichtung 4 die Drehgelenkeinrichtung 5.3 seitlich überlappt oder unter seitlicher Bezugnahme zumindest in unmittelbarer Nähe dazu angeordnet ist. Somit ist die hintere Lagereinrichtung 4 im Wesentlichen auf der gleichen Längs- und Höhenposition angeordnet wie die Drehgelenkeinrichtung 5.3. Es versteht sich, dass im Rahmen der Erfindung die hintere Lagereinrichtung 4 und die Drehgelenkeinrichtung 5.3 durch die tragende Struktur 2 seitlich verdeckt sein können. Den Figuren 5b und 6 ist ferner zu entnehmen, dass sich die tragende Struktur 2 bis hinter das vordere Ende 5.1 der Kupplungseinrichtung 5 und sogar bis fast zum hinteren Ende 5.2 der Kupplungseinrichtung 5 erstreckt. Die Schwenk-/ Lagerachse der hinteren Lagereinrichtung 4 verläuft im Wesentlichen parallel zur Querrichtung des Nutzfahrzeugs 100 und zumindest benachbart, vorzugsweise im Wesentlichen koaxial zu der Drehachse der Drehgelenkeinrichtung 5.3.

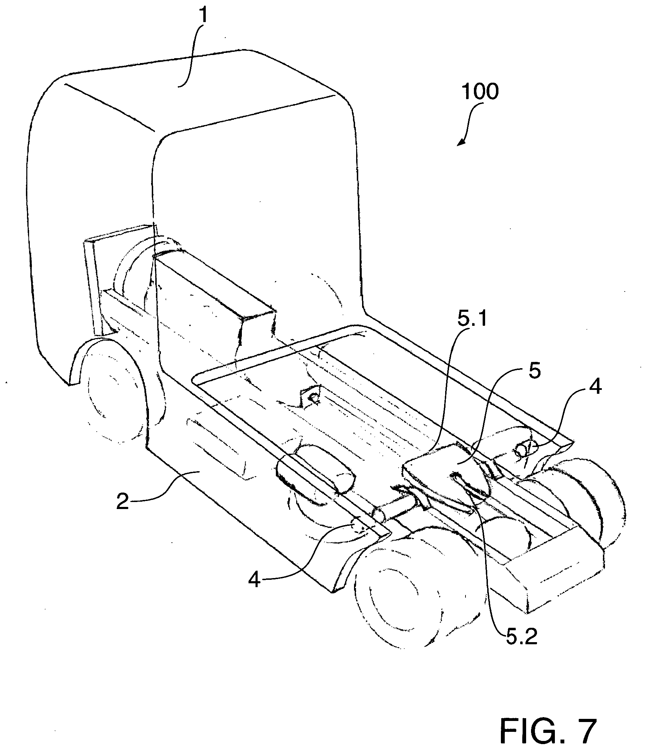

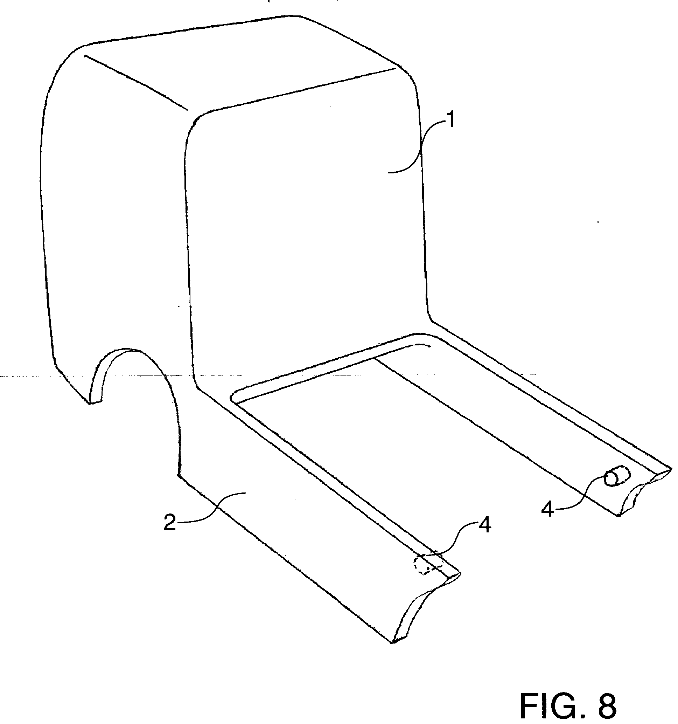

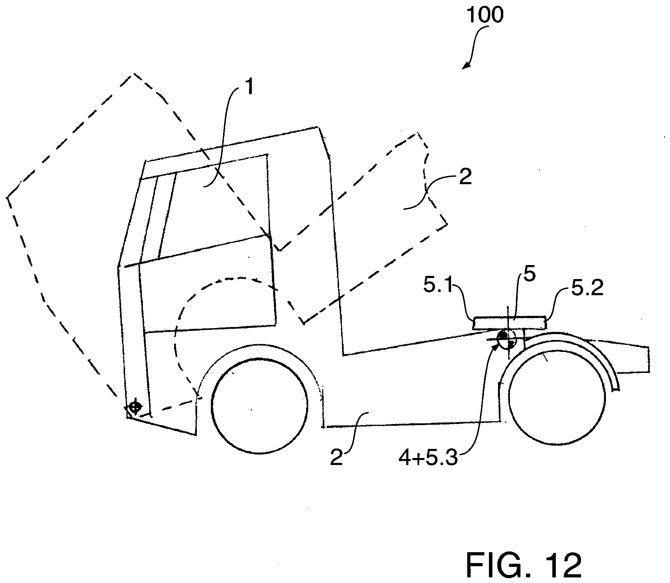

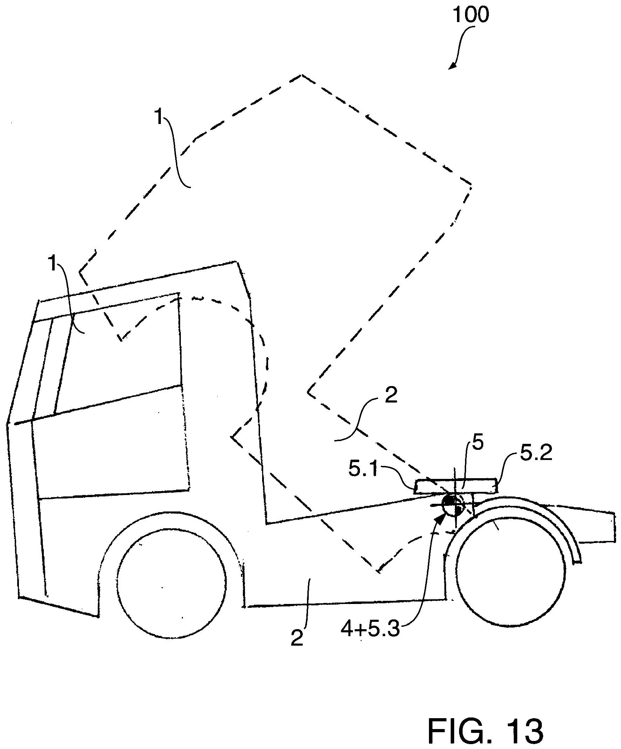

Figur 7 zeigt eine perspektivische Ansicht eines Nutzfahrzeugs 100 gemäß einer anderen Ausführungsform der Erfindung, während Figur 8 dessen Fahrerhaus 1 und seine tragende Struktur 2 isoliert von anderen Nutzfahrzeugteilen zeigt. Eine Besonderheit der in den Figuren 7 und 8 gezeigten Ausführungsform ist, dass im Gegensatz zu dem Nutzfahrzeug 100 der Figuren 1 bis 6 das Fahrerhaus 1 nicht von seiner tragenden Struktur 2 abkippbar ist, sondern eine untrennbare Einheit damit bildet. Dadurch kann die tragende Struktur 2 zusammen mit dem Fahrerhaus 1 gekippt werden, z.B. nach vorne mittels einer zusätzlichen Kipplagereinrichtung (vergleiche Figur 12) oder nach hinten z.B. mittels der hinteren Lagereinrichtung 4 (vergleiche Figur 13).

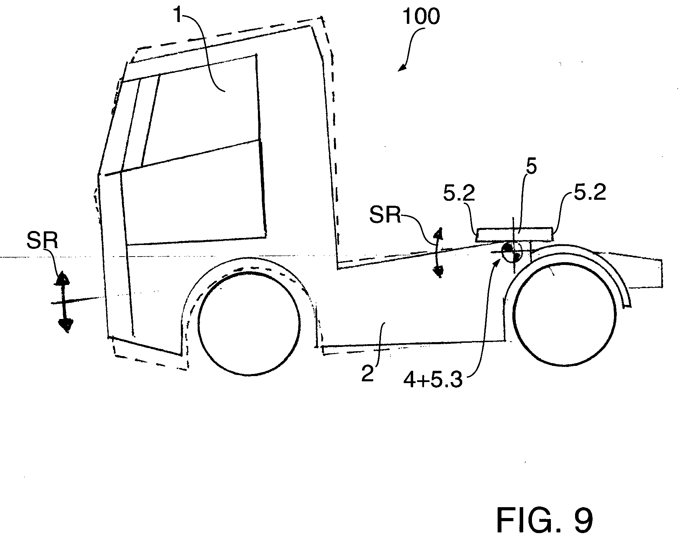

Figur 9 zeigt eine Seitenansicht eines Nutzfahrzeugs 100 gemäß einer Ausführungsform der Erfindung. Die tragende Struktur 2 ist mittels der vorderen Lagereinrichtung 3 (vergleiche z.B. Figuren 10 oder 11) auf- und abbewegbar, während die hintere Lagereinrichtung 4 eine Schwenk-/Schwingachse für die tragende Struktur 2 definiert, um die die tragende Struktur 2 zumindest geringfügig schwenk-/schwingbar ist. Die vordere Lagereinrichtung 3 kann z.B. Molekularlager, Spiralfedern, Luftfedern, Blattfedern, etc. umfassen, während die hintere Lagereinrichtung 4 z.B. Molekularlager oder klassische Drehlager umfassen kann.

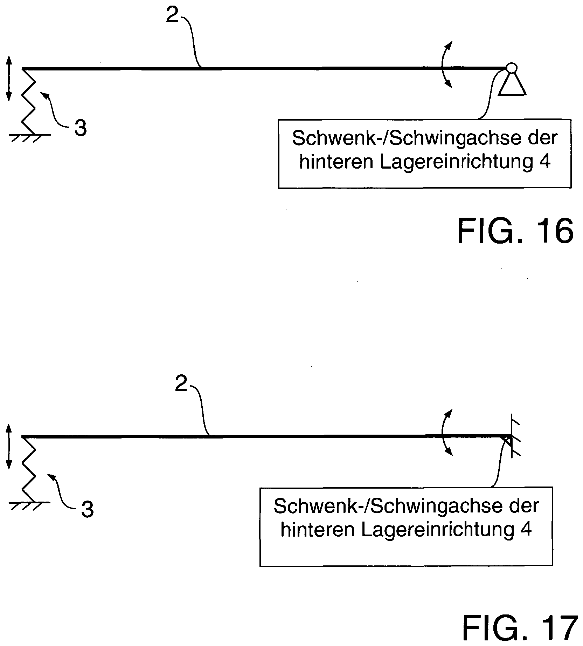

Figur 9 ist mittels der durchgezogenen Linie und der gestrichelten Linie das Schwenk-/Schwingverhalten des Fahrerhauses 1 und seiner tragenden Struktur 2 z.B. während der Fahrt des Nutzfahrzeugs 100 über unebenes Terrain zu entnehmen. Das Bezugszeichen SR kennzeichnet die Schwenk-/Schwingrichtung der tragenden Struktur 2 und somit des Fahrerhauses 1. Figur 9 zeigt, dass die tragende Struktur 2 in Bezug auf die vordere Lagereinrichtung 3 und die hintere Lagereinrichtung 4 als Schwinge fungiert. Das Lagerungskonzept entspricht dem in Figur 16 gezeigten.

Figur 10 zeigt eine explosionsartige Seitenansicht eines Nutzfahrzeugs 100 gemäß einer Ausführungsform der Erfindung. Figur 10 zeigt insbesondere, dass die vordere Lagereinrichtung 3 die tragende Struktur 2 auf fahrgestellfesten Teilen abstützen kann.

Figur 11 zeigt eine explosionsartige Seitenansicht eines Nutzfahrzeugs 100 gemäß einer anderen Ausführungsform der Erfindung. Eine Besonderheit des in Figur 11 gezeigten Nutzfahrzeugs 100 ist, dass die vordere Lagereinrichtung 3 die tragende Struktur 2 auf Rad-führenden Teilen abstützt.

Zu erwähnen ist, dass im Rahmen der Erfindung die vordere Lagereinrichtung 3 die tragende Struktur 2 auch z.B. auf einem Vorderachskörper, insbesondere einem Starrachskörpers des Nutzfahrzeugs 100 abstützen kann.

Figur 12 zeigt eine Seitenansicht eines Nutzfahrzeugs 100 gemäß einer anderen Ausführungsform der Erfindung. Eine Besonderheit des in Figur 12 gezeigten Nutzfahrzeugs 100 ist, dass das Fahrerhaus 1 zusammen mit seiner tragenden Struktur 2 um eine vordere, zusätzliche Kipplagereinrichtung nach vorne gekippt werden kann, was durch die gestrichelte Linie angedeutet ist.

Figur 13 zeigt eine Seitenansicht eines Nutzfahrzeugs 100 gemäß einer wiederum anderen Ausführungsform der Erfindung. Eine Besonderheit des in Figur 13 gezeigten Nutzfahrzeugs 100 ist, dass das Fahrerhaus 1 zusammen mit seiner tragenden Struktur 2 um die hintere Lagereinrichtung 4 nach hinten gekippt werden kann, was durch die gestrichelte Linie angedeutet ist.

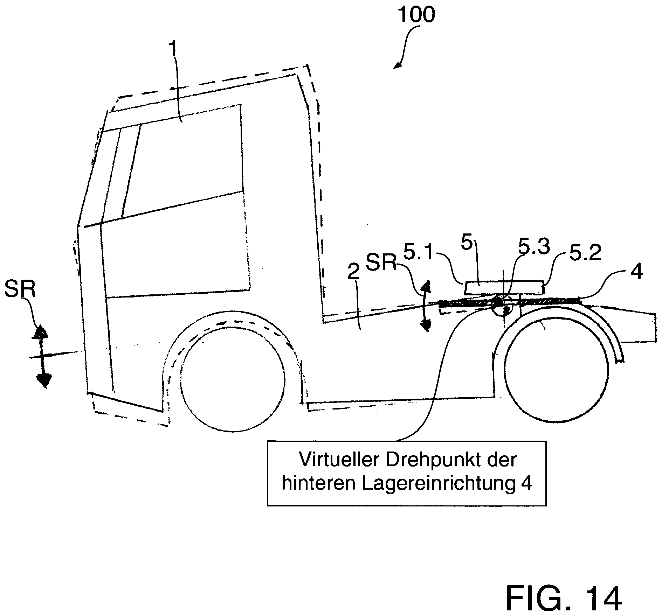

Figur 14 zeigt eine Seitenansicht eines Nutzfahrzeugs 100 gemäß einer anderen Ausführungsform der Erfindung. Die durchgezogenen und gestrichelten Linien deuten wiederum das Schwenk-/Schwingverhalten des Fahrerhauses 1 und der tragenden Struktur 2 z.B. während der Fahrt des Nutzfahrzeugs 100 über unebenes Terrain an. Die Bezugszeichen SR kennzeichnen erneut die Schwenk-/Schwingrichtung der tragenden Struktur 2 und somit des Fahrerhauses 1.

Eine Besonderheit des in Figur 14 gezeigten Nutzfahrzeugs 100 ist, dass die hintere Lagereinrichtung 4 nicht als Dreh- oder Molekularlager ausgeführt ist, sondern in Längsrichtung des Nutzfahrzeugs 100 ausgerichtete Blattfedern aufweist. Mittels der Blattfedern ist eine quasi virtuelle Dreh-/Schwenkachse (virtueller Drehpunkt) erzeugbar, wodurch die tragende Struktur 2 in Verbindung mit der vorderen Lagereinrichtung 3, die einen im Wesentlichen vertikalen Bewegungsspielraum für die tragende Struktur 2 zur Verfügung stellt, eine Schwenk-/Schwingbewegung ausführen und somit als Schwinge wirken kann. Auch in der in Figur 14 gezeigten Ausführungsform überlappt die hintere Lagereinrichtung 4 seitlich die Drehgelenkeinrichtung 5.3 oder ist seitlich betrachtet zumindest benachbart dazu angeordnet. Ebenso verläuft die virtuelle Schwenk-/Schwingachse parallel und zumindest benachbart zu der Drehachse der Drehgelenkeinrichtung 5.3. Das Lagerungskonzept entspricht dem in Figur 16 gezeigten.

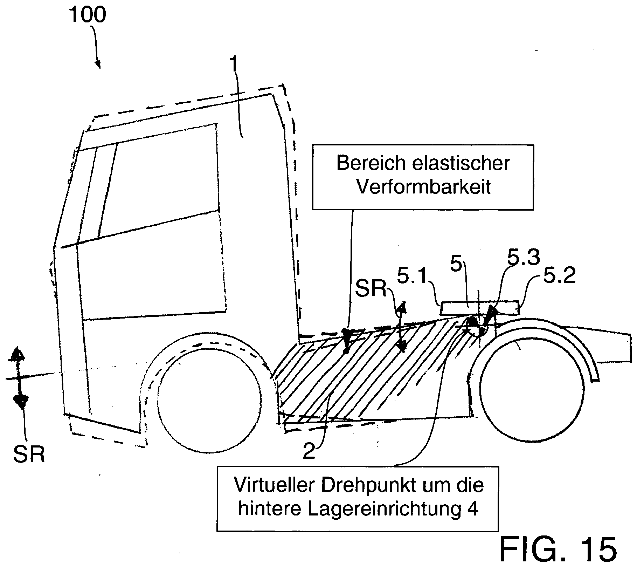

Figur 15 zeigt eine Seitenansicht eines Nutzfahrzeugs 100 gemäß der Erfindung. Die durchgezogenen und gestrichelten Linien deuten wiederum das Schwenk-/Schwingverhalten des Fahrerhauses 1 und der tragenden Struktur 2 z.B. während der Fahrt des Nutzfahrzeugs 100 über unebenes Terrain an. Die Bezugszeichen SR kennzeichnen erneut die Schwenk-/Schwingrichtung der tragenden Struktur 2 und somit des Fahrerhauses 1.
Eine Besonderheit des in Figur 15 gezeigten Nutzfahrzeugs 100 ist, dass die hintere Lagereinrichtung 4 ein Einspannlager für die tragende Struktur 2 darstellt. Die Schwing-/ Schwenkbewegung der tragenden Struktur 2 wird dadurch ermöglicht, dass die tragende Struktur 2 gezielt abschnittsweise elastisch verformbar ist, wodurch eine quasi virtuelle Schwenk-/Schwingachse (virtueller Drehpunkt) erzeugbar ist und die tragende Struktur 2 trotz Einspannung an der hinteren Lagereinrichtung 4 als Schwinge wirken kann. Auch in der in Figur 15 gezeigten Ausführungsform überlappt die hintere Lagereinrichtung 4 seitlich die Drehgelenkeinrichtung 5.3 oder ist seitlich betrachtet zumindest benachbart dazu angeordnet. Ebenso verläuft die virtuelle Schwenk-/Schwingachse parallel und zumindest benachbart zu der Drehachse der Drehgelenkeinrichtung 5.3. Das Lagerungskonzept entspricht dem in Figur 17 gezeigten.

Figur 16 zeigt schematisch ein Lagerungskonzept gemäß einer Ausführungsform der Erfindung. Die vordere Lagereinrichtung 3 dient dazu, die tragende Struktur 2 auf- und abbewegbar zu lagern. Die hintere Lagereinrichtung 4 ist z.B. als Drehlager ausgeführt, das eine Schwenk-/Schwingachse für die tragende Struktur 2 definiert. Die tragende Struktur 2 ist in Bezug auf die hintere Lagereinrichtung 4 schwenkbar gelagert. Dadurch kann die tragende Struktur 2 als Schwinge wirken, was durch die Doppelpfeile angedeutet ist.

Figur 17 zeigt schematisch ein Lagerungskonzept gemäß einer anderen Ausführungsform der Erfindung. Die vordere Lagereinrichtung 3 dient wiederum dazu, die tragende Struktur 2 auf- und abbewegbar zu lagern. Die hintere Lagereinrichtung 4 ist als Einspannlager ausgeführt, das eine Schwenk-/Schwingachse für die tragende Struktur 2 definiert. Die tragende Struktur 2 ist zumindest abschnittsweise elastisch verformbar ausgeführt und in Bezug auf die hintere Lagereinrichtung 4 schwenk-/schwingbar. Somit kann die tragende Struktur 2 trotz Einspannung an der hinteren Lagereinrichtung 4 mittels der elastischen Verformbarkeit als Schwinge wirken, was durch die Doppelpfeile angedeutet ist. Die in Figur 17 gezeigte hintere Lagereinrichtung 4 muss nicht zwangsläufig eine im Wesentlichen starre Einspannung zur Verfügung stellen, sondern kann auch gezielt nachgiebig ausgeführt sein, wodurch eine Art Mischform zwischen den in den Figuren 16 und 17 gezeigten hinteren Lagereinrichtungen 4 erzeugbar ist.

## Patentansprüche

1. Nutzfahrzeug (100), vorzugsweise Sattelzugmaschine zum Aufsatteln eines Anhängers, mit
- einem Fahrerhaus (1), das eine tragende Struktur (2) umfasst und kippbar ausgeführt ist,
- einer vorderen Lagereinrichtung (3) und einer hinteren Lagereinrichtung (4), die zum Lagern der tragenden Struktur (2) dienen, und
- einer Kupplungseinrichtung (5), vorzugsweise einer Sattelkupplungseinrichtung, zum Ankuppeln eines Anhängers, wobei die Kupplungseinrichtung (5) ein vorderes Ende (5.1) und ein hinteres Ende (5.2) aufweist,
- wobei die tragende Struktur (2) sich vom Fahrerhaus (1) nach hinten erstreckt, vorzugsweise sich vom Fahrerhaus (1) bis hinter das vordere Ende (5.1) der Kupplungseinrichtung (5) erstreckt,
**dadurch gekennzeichnet, dass**
- die tragende Struktur (2) zumindest abschnittsweise elastisch verformbar ist, um in Bezug auf die hintere Lagereinrichtung (4) schwenk- oder schwingbar zu sein.

2. Nutzfahrzeug (100) nach Anspruch 1, **dadurch gekennzeichnet, dass** die hintere Lagereinrichtung (4) hinter dem Fahrerhaus (1) oder zumindest abschnittsweise hinter dem vorderen Ende (5.1) der Kupplungseinrichtung (5) angeordnet ist und vorzugsweise vor dem hinteren Ende (5.1) der Kupplungseinrichtung (5).

3. Nutzfahrzeug (100) nach Anspruch 1 oder 2, **dadurch gekennzeichnet, dass** die Kupplungseinrichtung (5) als eine eine Drehgelenkeinrichtung (5.3) umfassende Sattelplatte (5) ausgeführt ist und die hintere Lagereinrichtung (4) seitlich die Drehgelenkeinrichtung (5.3) der Sattelplatte (5) überlappt oder seitlich betrachtet zumindest benachbart dazu angeordnet ist.

4. Nutzfahrzeug (100) nach einem der vorhergehenden Ansprüche, **dadurch gekennzeichnet, dass** die Führung/Lagerung der tragenden Struktur (2) in Längs- und Querrichtung des Nutzfahrzeugs (100) zumindest teilweise durch die hintere Lagereinrichtung (4) realisiert wird.

5. Nutzfahrzeug (100) nach einem der vorhergehenden Ansprüche, **dadurch gekennzeichnet, dass** die tragende Struktur (2) ausgeführt ist, um in Bezug auf die vordere Lagereinrichtung (3) und die hintere Lagereinrichtung (4) als Schwinge zu wirken.

6. Nutzfahrzeug (100) nach einem der vorhergehenden Ansprüche, **dadurch gekennzeichnet, dass** die vordere Lagereinrichtung (3) die tragende Struktur (2) auf- und abbewegbar lagert, vorzugsweise über Feder- und/oder Dämpferelemente.

7. Nutzfahrzeug (100) nach einem der vorhergehenden Ansprüche, **dadurch gekennzeichnet, dass** die hintere Lagereinrichtung (4) eine Schwenk- oder Schwingachse für die tragende Struktur (2) definiert.

8. Nutzfahrzeug (100) nach einem der vorhergehenden Ansprüche, **dadurch gekennzeichnet, dass** die Lagerachse der hinteren Lagereinrichtung (4) im Wesentlichen parallel zur Querrichtung des Nutzfahrzeugs (100) verläuft und zumindest benachbart, vorzugsweise im Wesentlichen koaxial, zu einer Drehgelenkeinrichtung (5.3) der Sattelplatte (5).

9. Nutzfahrzeug (100) nach einem der vorhergehenden Ansprüche, **dadurch gekennzeichnet, dass** die hintere Lagereinrichtung (4) Dämpfungselemente umfasst.

10. Nutzfahrzeug (100) nach einem der vorhergehenden Ansprüche, **dadurch gekennzeichnet, dass** die hintere Lagereinrichtung (4) Molekularlager oder in Längsrichtung des Nutzfahrzeugs (100) ausgerichtete Blattfedern umfasst.

11. Nutzfahrzeug (100) nach einem der vorhergehenden Ansprüche, **dadurch gekennzeichnet, dass** die hintere Lagereinrichtung (4) Drehlager umfasst.

12. Nutzfahrzeug (100) nach einem der vorhergehenden Ansprüche, **dadurch gekennzeichnet, dass** die tragende Struktur (2) zumindest abschnittsweise elastisch verformbar ist, um ihre Wankabstützung zumindest teilweise selbst zu übernehmen.

13. Nutzfahrzeug (100) nach einem der vorhergehenden Ansprüche, **dadurch gekennzeichnet, dass** die tragende Struktur (2) eine Trägerkonstruktion oder eine Gitterrahmenkonstruktion umfasst.

14. Nutzfahrzeug (100) nach einem der vorhergehenden Ansprüche, **dadurch gekennzeichnet, dass** die tragende Struktur (2) eine selbsttragende Karosserie umfasst, vorzugsweise eine Seitenverkleidung für das Nutzfahrzeug (100), die als mittragender Teil der tragenden Struktur (2) des Fahrerhauses (1) wirkt.

15. Nutzfahrzeug (100) nach einem der vorhergehenden Ansprüche, **dadurch gekennzeichnet, dass** in die tragende Struktur (2) die Seitenverkleidungen hinter einer Vorderachse und vor einer Hinterachse des Nutzfahrzeugs (100) integriert sind.

16. Nutzfahrzeug (100) nach einem der vorhergehenden Ansprüche, **dadurch gekennzeichnet, dass** in die tragende Struktur (2) zumindest Teile der Kotflügel für die Vorderräder des Nutzfahrzeugs (100) und/oder zumindest Teile der Kotflügel für die Hinterräder des Nutzfahrzeugs (100) integriert sind.

17. Nutzfahrzeug (100) nach einem der vorhergehenden Ansprüche, **dadurch gekennzeichnet, dass** die vordere Lagereinrichtung (3) die tragende Struktur (2) auf fahrgestellfesten Teilen, auf Rad-führenden Teilen oder einem Vorderachskörper des Nutzfahrzeugs (100) abstützt.

18. Nutzfahrzeug (100) nach einem der vorhergehenden Ansprüche, **dadurch gekennzeichnet, dass** die Führung/Lagerung der tragenden Struktur (2) in Längs- und Querrichtung des Nutzfahrzeugs (100) zumindest teilweise durch die vordere Lagereinrichtung (3) oder eine zusätzliche Lagereinrichtung realisiert wird.

19. Nutzfahrzeug (100) nach einem der vorhergehenden Ansprüche, **dadurch gekennzeichnet, dass** das Fahrerhaus (1) oder die tragende Struktur (2) vorne über eine Schwingen- oder Stabilisatoreinrichtung gegen Wanken abgestützt ist.

20. Nutzfahrzeug (100) nach einem der vorhergehenden Ansprüche, **dadurch gekennzeichnet, dass** die vordere Lagereinrichtung (3) zwei zur Fahrzeugmitte hin schräg angestellte Lagermittel umfasst, um zusätzlich zu ihrer Höhenführung eine Querführung zu übernehmen.

21. Nutzfahrzeug (100) nach einem der vorhergehenden Ansprüche, **dadurch gekennzeichnet, dass** die tragende Struktur (2) zusammen mit dem Fahrerhaus (1) kippbar ist.

22. Nutzfahrzeug (100) nach einem der vorhergehenden Ansprüche, **dadurch gekennzeichnet, dass** die tragende Struktur (2) zusammen mit dem Fahrerhaus (1) um die hintere Lagereinrichtung (4) kippbar ist, vorzugsweise nach hinten.

23. Nutzfahrzeug (100) nach einem der Ansprüche 1 bis 21, **dadurch gekennzeichnet, dass** die tragende Struktur (2) zusammen mit dem Fahrerhaus (1) um die vordere Lagereinrichtung (3) oder um eine zusätzliche vordere Kipplagereinrichtung kippbar ist, vorzugsweise nach vorne.

24. Nutzfahrzeug (100) nach einem der Ansprüche 1 bis 21, **dadurch gekennzeichnet, dass**
- das Fahrerhaus (1) oder zumindest ein oberer Teil davon mittels einer Kipplagereinrichtung relativ zu der tragenden Struktur (2) kippbar ausgeführt ist; oder
- das Fahrerhaus (1) um eine Kipplagereinrichtung zweiteilbar kippbar ist, während die tragende Struktur (2) an der ersten Lagereinrichtung (3) und der zweiten Lagereinrichtung (4) gelagert bleibt.

## Claims

1. A commercial vehicle (100), preferably a semitrailer tractor for coupling a trailer, having
- a driver's cab (1) which comprises a loadbearing structure (2) and is of tiltable configuration,
- a front bearing device (3) and a rear bearing device (4) which serve for mounting the loadbearing structure (2), and
- a coupling device (5), preferably a fifth-wheel coupling device, for coupling a trailer, the coupling device (5) having a front end (5.1) and a rear end (5.2),
- the loadbearing structure (2) extending from the driver's cab (1) towards the rear, preferably extending from the driver's cab (1) as far as behind the front end (5.1) of the coupling device (5),
**characterized in that**
- the loadbearing structure (2) can be deformed elastically at least in sections, in order to be capable of pivoting or swinging in relation to the rear bearing device (4).

2. The commercial vehicle (100) according to Claim 1, **characterized in that** the rear bearing device (4) is arranged behind the driver's cab (1) or at least in sections behind the front end (5.1) of the coupling device (5) and preferably in front of the rear end (5.1) of the coupling device (5).

3. The commercial vehicle (100) according to Claim 1 or 2, **characterized in that** the coupling device (5) is configured as a fifth-wheel plate (5) which comprises a swivel joint device (5.3), and the rear bearing device (4) overlaps the swivel joint device (5.3) of the fifth-wheel plate (5) laterally or is at least arranged adjacently with respect thereto, as viewed laterally.

4. The commercial vehicle (100) according to one of the preceding claims, **characterized in that** the guiding/mounting of the loadbearing structure (2) in the longitudinal and transverse direction of the commercial vehicle (100) is realized at least partially by way of the rear bearing device (4).

5. The commercial vehicle (100) according to one of the preceding claims, **characterized in that** the loadbearing structure (2) is configured to act as a swing arm in relation to the front bearing device (3) and the rear bearing device (4).

6. The commercial vehicle (100) according to one of the preceding claims, **characterized in that** the front bearing device (3) mounts the loadbearing structure (2) such that it can be moved up and down, preferably via spring and/or damper elements.

7. The commercial vehicle (100) according to one of the preceding claims, **characterized in that** the rear bearing device (4) defines a swivel or swing axis for the loadbearing structure (2).

8. The commercial vehicle (100) according to one of the preceding claims, **characterized in that** the bearing axis of the rear bearing device (4) runs substantially parallel to the transverse direction of the commercial vehicle (100) and at least adjacently, preferably substantially coaxially, with respect to a swivel joint device (5.3) of the fifth-wheel plate (5).

9. The commercial vehicle (100) according to one of the preceding claims, **characterized in that** the rear bearing device (4) comprises damping elements.

10. The commercial vehicle (100) according to one of the preceding claims, **characterized in that** the rear bearing device (4) comprises molecular bearings or leaf springs which are oriented in the longitudinal direction of the commercial vehicle (100).

11. The commercial vehicle (100) according to one of the preceding claims, **characterized in that** the rear bearing device (4) comprises swivel bearings.

12. The commercial vehicle (100) according to one of the preceding claims, **characterized in that** the loadbearing structure (2) can be deformed elastically at least in sections, in order to take over its anti-roll support itself at least partially.

13. The commercial vehicle (100) according to one of the preceding claims, **characterized in that** the loadbearing structure (2) comprises a supporting structure or a space frame structure.

14. The commercial vehicle (100) according to one of the preceding claims, **characterized in that** the loadbearing structure (2) comprises a self-supporting vehicle body, preferably a side panel for the commercial vehicle (100), which side panel acts as a joint loadbearing part of the loadbearing structure (2) of the driver's cab (1).

15. The commercial vehicle (100) according to one of the preceding claims, **characterized in that** the side panels behind a front axle and in front of a rear axle of the commercial vehicle (100) are integrated into the loadbearing structure (2).

16. The commercial vehicle (100) according to one of the preceding claims, **characterized in that** at least parts of the mudguards for the front wheels of the commercial vehicle (100) and/or at least parts of the mudguards for the rear wheels of the commercial vehicle (100) are integrated into the loadbearing structure (2).

17. The commercial vehicle (100) according to one of the preceding claims, **characterized in that** the front bearing device (3) is supported on parts which are fixed on the chassis, on wheel steering parts or a front axle beam of the commercial vehicle (100).

18. The commercial vehicle (100) according to one of the preceding claims, **characterized in that** the guiding/mounting of the loadbearing structure (2) in the longitudinal and transverse direction of the commercial vehicle (100) is realised at least partially by way of the front bearing device (3) or an additional bearing device.

19. The commercial vehicle (100) according to one of the preceding claims, **characterized in that** the driver's cab (1) or the loadbearing structure (2) is supported against rolling at the front via a swing arm device or anti-roll device.

20. The commercial vehicle (100) according to one of the preceding claims, **characterized in that** the front bearing device (3) comprises two bearing means which are set obliquely towards the vehicle centre, in order to take over transverse guidance in addition to its vertical guidance.

21. The commercial vehicle (100) according to one of the preceding claims, **characterized in that** the loadbearing structure (2) can be tilted together with the driver's cab (1).

22. The commercial vehicle (100) according to one of the preceding claims, **characterized in that** the loadbearing structure (2) can be tilted together with the driver's cab (1) about the rear bearing device (4), preferably towards the rear.

23. The commercial vehicle (100) according to one of Claims 1 to 21, **characterized in that** the loadbearing structure (2) can be tilted together with the driver's cab (1) about the front bearing device (3) or about an additional front tilting bearing device, preferably towards the front.

24. The commercial vehicle (100) according to one of Claims 1 to 21, **characterized in that**
- the driver's cab (1) or at least an upper part thereof is configured such that it can be tilted relative to the loadbearing structure (2) by means of a tilting bearing device; or
- the driver's cab (1) can be tilted about a tilting bearing device such that it can be split in two, whereas the loadbearing structure (2) remains mounted on the first bearing device (3) and the second bearing device (4).

## Revendications

1. Véhicule utilitaire (100), de préférence tracteur pour semi-remorque servant à l'attelage d'une remorque, comprenant
- une cabine de conducteur (1) qui comporte une structure porteuse (2) et est réalisée de manière basculante,
- un dispositif de support avant (3) et un dispositif de support arrière (4) qui servent au montage de la structure porteuse (2) et
- un dispositif d'attelage (5), de préférence un dispositif de sellette d'attelage pour attacher une remorque, dans lequel le dispositif d'attelage (5) comprend une extrémité avant (5.1) et une extrémité arrière (5.2),
- dans lequel la structure porteuse (2) s'étend vers l'arrière à partir de la cabine de conducteur (1), de préférence s'étend à partir de la cabine de conducteur (1) jusque derrière l'extrémité avant (5.1) du dispositif d'attelage (5),
**caractérisé en ce que**
- la structure porteuse (2) est déformable élastiquement au moins dans certaines zones afin de pouvoir pivoter ou osciller par rapport au dispositif de support arrière (4).

2. Véhicule utilitaire (100) selon la revendication 1, **caractérisé en ce que** le dispositif de support arrière (4) est disposé derrière la cabine de conducteur (1) ou au moins dans certaines zones derrière l'extrémité avant (5.1) du dispositif d'attelage (5) et de préférence devant l'extrémité arrière (5.1) du dispositif d'attelage (5) .

3. Véhicule utilitaire (100) selon la revendication 1 ou 2, **caractérisé en ce que** le dispositif d'attelage (5) est réalisé sous la forme d'une plaque de sellette (5) comportant un dispositif d'articulation rotative (5.3) et le dispositif de support arrière (4) chevauche latéralement le dispositif d'articulation rotative (5.3) de la plaque de sellette (5) ou est disposé de manière au moins adjacente à celui-ci lorsque considéré latéralement.

4. Véhicule utilitaire (100) selon l'une des revendications précédentes, **caractérisé en ce que** le guidage/montage de la structure porteuse (2) dans la direction longitudinale et transversale du véhicule utilitaire (100) est réalisé au moins partiellement au moyen du dispositif de support arrière (4).

5. Véhicule utilitaire (100) selon l'une des revendications précédentes, **caractérisé en ce que** la structure porteuse (2) est réalisée pour agir en tant que bras oscillant par rapport au dispositif de support avant (3) et au dispositif de support arrière (4).

6. Véhicule utilitaire (100) selon l'une des revendications précédentes, **caractérisé en ce que** le dispositif de support avant (3) supporte la structure porteuse (2) de manière déplaçable vers le haut et vers le bas, de préférence par le biais d'éléments ressorts et/ou amortisseurs.

7. Véhicule utilitaire (100) selon l'une des revendications précédentes, **caractérisé en ce que** le dispositif de support arrière (4) définit un axe de pivotement ou d'oscillation pour la structure porteuse (2) .

8. Véhicule utilitaire (100) selon l'une des revendications précédentes, **caractérisé en ce que** l'axe de support du dispositif de support arrière (4) s'étend sensiblement parallèlement à la direction transversale du véhicule utilitaire (100) et au moins de manière adjacente, de préférence sensiblement coaxiale, à un dispositif d'articulation rotative (5.3) de la plaque de sellette (5).

9. Véhicule utilitaire (100) selon l'une des revendications précédentes, **caractérisé en ce que** le dispositif de support arrière (4) comporte des éléments d'amortissement.

10. Véhicule utilitaire (100) selon l'une des revendications précédentes, **caractérisé en ce que** le dispositif de support arrière (4) comporte des paliers moléculaires ou des ressorts à lames orientés dans la direction longitudinale du véhicule utilitaire (100).

11. Véhicule utilitaire (100) selon l'une des revendications précédentes, **caractérisé en ce que** le dispositif de support arrière (4) comporte des paliers rotatifs.

12. Véhicule utilitaire (100) selon l'une des revendications précédentes, **caractérisé en ce que** la structure porteuse (2) est déformable élastiquement au moins dans certaines zones afin de prendre en charge elle-même au moins partiellement son support antiroulis.

13. Véhicule utilitaire (100) selon l'une des revendications précédentes, **caractérisé en ce que** la structure porteuse (2) comporte une construction de support ou une construction de cadre de type treillis.

14. Véhicule utilitaire (100) selon l'une des revendications précédentes, **caractérisé en ce que** la structure porteuse (2) comporte une carrosserie autoporteuse, de préférence un panneau latéral pour le véhicule utilitaire (100), lequel panneau agit en tant que partie co-porteuse de la structure porteuse (2) de la cabine de conducteur (1).

15. Véhicule utilitaire (100) selon l'une des revendications précédentes, **caractérisé en ce que** les panneaux latéraux sont intégrés dans la structure porteuse (2) derrière un essieu avant et devant un essieu arrière du véhicule utilitaire (100).

16. Véhicule utilitaire (100) selon l'une des revendications précédentes, **caractérisé en ce qu'**au moins des parties des ailes pour les roues avant du véhicule utilitaire (100) et/ou au moins des parties des ailes pour les roues arrière du véhicule utilitaire (100) sont intégrées dans la structure porteuse (2).

17. Véhicule utilitaire (100) selon l'une des revendications précédentes, **caractérisé en ce que** le dispositif de support avant (3) supporte la structure porteuse (2) sur des parties solidaires du châssis, sur des parties de guidage de roue ou un corps d'essieu avant du véhicule utilitaire (100).

18. Véhicule utilitaire (100) selon l'une des revendications précédentes, **caractérisé en ce que** le guidage/montage de la structure porteuse (2) dans la direction longitudinale et transversale du véhicule utilitaire (100) est réalisé au moins partiellement au moyen du dispositif de support avant (3) ou d'un dispositif de support supplémentaire.

19. Véhicule utilitaire (100) selon l'une des revendications précédentes, **caractérisé en ce que** la cabine de conducteur (1) ou la structure porteuse (2) est supportée à l'avant vis-à-vis du roulis par le biais d'un dispositif d'oscillation ou de stabilisation.

20. Véhicule utilitaire (100) selon l'une des revendications précédentes, **caractérisé en ce que** le dispositif de support avant (3) comporte deux moyens de support placés de manière inclinée vers le centre du véhicule afin de prendre en charge un guidage transversal en plus de leur guidage en hauteur.

21. Véhicule utilitaire (100) selon l'une des revendications précédentes, **caractérisé en ce que** la structure porteuse (2) peut basculer conjointement avec la cabine de conducteur (1).

22. Véhicule utilitaire (100) selon l'une des revendications précédentes, **caractérisé en ce que** la structure porteuse (2) peut basculer conjointement avec la cabine de conducteur (1) autour du dispositif de support arrière (4), de préférence vers l'arrière.

23. Véhicule utilitaire (100) selon l'une des revendications 1 à 21, **caractérisé en ce que** la structure porteuse (2) peut basculer conjointement avec la cabine de conducteur (1) autour du dispositif de support avant (3) ou autour d'un dispositif de support oscillant avant supplémentaire, de préférence vers l'avant.

24. Véhicule utilitaire (100) selon l'une des revendications 1 à 21, **caractérisé en ce que**
- la cabine de conducteur (1) ou au moins une partie supérieure de celle-ci est réalisée de manière basculante par rapport à la structure porteuse (2) au moyen d'un dispositif de support oscillant ; ou
- la cabine de conducteur (1) peut basculer de manière divisible autour d'un dispositif de support oscillant, tandis que la structure porteuse (2) demeure supportée au niveau du premier dispositif de support (3) et du deuxième dispositif de support (4).
